(19) Europäisches Patentamt
European Patent Office
Office européen des brevets

(11) **EP 2 097 324 B1**

(12) **EUROPÄISCHE PATENTSCHRIFT**

(45) Veröffentlichungstag und Bekanntmachung des Hinweises auf die Patenterteilung:
**30.11.2011 Patentblatt 2011/48**

(21) Anmeldenummer: **07801799.3**

(22) Anmeldetag: **22.08.2007**

(51) Int Cl.:
**B65B 57/14** *(2006.01)*     **B65B 35/44** *(2006.01)*

(86) Internationale Anmeldenummer:
**PCT/EP2007/007366**

(87) Internationale Veröffentlichungsnummer:
**WO 2008/049480 (02.05.2008 Gazette 2008/18)**

(54) **VERFAHREN ZUR STEUERUNG DER ÜBERGABE EINES PRODUKTSTAPELS IN EINER VERPACKUNGSMASCHINE**

METHOD FOR CONTROLLING THE TRANSFER OF A PRODUCT STACK IN A PACKAGING MACHINE

PROCEDE POUR COMMANDER LE TRANSFERT D'UNE PILE DE PRODUITS DANS UNE MACHINE D'EMBALLAGE

(84) Benannte Vertragsstaaten:
**DE FR GB IE IT SE**

(30) Priorität: **23.10.2006 DE 102006049801**

(43) Veröffentlichungstag der Anmeldung:
**09.09.2009 Patentblatt 2009/37**

(73) Patentinhaber: **IWK Verpackungstechnik GmbH
76297 Stutensee (DE)**

(72) Erfinder: **CHRIST, Richard
56581 Emmelshausen (DE)**

(74) Vertreter: **Lasch, Hartmut et al
LICHTI - Patentanwälte
Postfach 41 07 60
76207 Karlsruhe (DE)**

(56) Entgegenhaltungen:
**EP-A- 0 091 670     EP-A- 0 640 526
EP-A- 0 712 782     US-B1- 6 540 063**

**Beschreibung**

Die Erfindung betrifft ein Verfahren zur Steuerung der Übergabe eines Produktstapels in einer Verpackungsmaschine, wobei der Produktstapel während eines Arbeitstaktes $T_A$ aus n Produkten aufgebaut und anschließend während eines Übergabetaktes $T_T$ mittels einer Übergabevorrichtung in eine Zelle eines kontinuierlich bewegten Förderers übergeben wird, wobei der in der Übergabevorrichtung befindliche Produktstapel und die Zelle des Förderers zumindest am Ende des Übergabetaktes $T_T$ eine vorbestimmte Relativposition einnehmen.

In einer Verpackungsmaschine gibt es eine Vielzahl von Arbeitsstationen oder Baugruppen, die in vorbestimmter zeitlicher und räumlicher Relation zueinander bewegt werden. Dabei werden einige Baugruppen getaktet bewegt, d.h. nach einer Transportbewegung um eine vorbestimmte Strecke bleiben die Förderbänder oder -ketten für eine vorbestimmte Zeit stehen. Auf diese Weise wechseln sich bei der getakteten Bewegung Bewegungs- oder Transportphasen und Stillstandsphasen ab.

Darüber hinaus gibt es in einer Verpackungsmaschine auch mehrere Baugruppen oder Arbeitsstationen, die kontinuierlich angetrieben sind, d.h. keine Stillstandsphasen besitzen, und beim normalen, störungsfreien Betrieb der Verpackungsmaschine üblicherweise mit konstanter Geschwindigkeit bewegt werden.

Im Folgenden soll beispielhaft von einer Verpackungsmaschine ausgegangen werden, bei der ein zu verpackendes Produkt auf einem getaktet angetriebenen Zuführband zu einer Stapelstation transportiert wird, in der aus den nacheinander eintreffenden einzelnen Produkten, beispielsweise Blisterstreifen, ein Produktstapel aus n einzelnen Produkten aufgebaut wird. Sobald der Produktstapel die vorgegebene Sollanzahl von einzelnen Produkten erreicht hat, wird er von einer Übergabevorrichtung während eines Übergabetaktes $T_T$ in eine Zelle eines kontinuierlich angetriebenen Produkt-Förderers einer Kartoniermaschine eingeschoben. Kontinuierlich arbeitende Kartoniermaschinen haben gegenüber intermittierend arbeitenden Kartoniermaschinen den Vorteil, dass sie mit einer höheren Arbeitsleistung gefahren werden können und dass ein weicher, glatter und dadurch störungsfreier Einschub des Produktstapels in eine Faltschachtel erreicht werden kann. Darüber hinaus sind bei einer kontinuierlich arbeitenden Kartoniermaschine starke Brems- und Beschleunigungsbewegungen vermieden, so dass die Gefahr verringert ist, dass der Produktstapel umfallen könnte.

Der Produkt-Förderer der Kartoniermaschine besteht aus einem endlos umlaufenden Förderband oder einer entsprechenden Förderkette, auf deren Außenseite eine Vielzahl von kammerartigen Zellen ausgebildet sind, in die jeweils ein Produktstapel eingelegt werden kann. Aufeinanderfolgende Zellen sind jeweils gleich beabstandet und von auf der Außenseite des Förderers hervorstehenden Zellenwänden oder -begrenzungen begrenzt. Beim Umlauf um eine Umlenkrolle öffnen sich die Zellen soweit, dass der Produktstapel auf der Höhe der Transportebene in die geöffnete Zelle seitlich in Laufrichtung des Förderers eingeschoben werden kann. Nachdem der Umlauf um die Umlenkrolle abgeschlossen ist, schließen sich die Zellen mit dem aufgenommenen Produktstapel soweit, dass der Produktstapel sicher von den Zellenwänden erfasst und mit dem Förderer weitertransportiert wird.

Die einzelnen Produkte werden im Normalbetrieb der Verpackungsmaschine ohne Unterbrechung in getakteter Bewegung der Stapelstation zugeführt, in der innerhalb eines Arbeitstaktes $T_A$ ein Produktstapel gebildet wird. Am Ende eines jeden Arbeitstaktes $T_A$ steht ein neuer Produktstapel zur Verfügung, der von der Übergabevorrichtung innerhalb eines Übergabetaktes $T_T$ an die jeweils zugeordnete Zelle des kontinuierlich laufenden Förderers übergeben wird. Auf diese Weise ist es möglich, den Förderer mit konstanter Bewegungsgeschwindigkeit anzutreiben.

Bei der Produktion der einzelnen Produkte kann es passieren, dass einzelne Produkte als mangelhaft erkannt und deshalb ausgeschieden werden. Dies kann beispielsweise der Fall sein, wenn ein Blisterstreifen nicht oder nur unvollständig gefüllt ist oder sich als undicht oder in sonstiger Weise fehlerhaft erwiesen hat. Wenn ein Produkt als fehlerhaft erkannt ist, wird es noch vor der Stapelstation aus dem Verpackungsprozess herausgenommen, so dass in der Reihe aufeinanderfolgender Produkte eine Lücke entsteht. Dies führt dazu, dass der Aufbau eines beispielsweise aus drei Produkten bestehenden Produktstapels in der Stapelstation nicht drei Teil-Takte dauert, sondern sich um einen Teil-Takt auf vier Teil-Takte verlängert, da auf einer Position des Zuführbandes kein Blisterstreifen vorhanden ist. Um diese Unregelmäßigkeit zu vermeiden, ist es bei bekannten Verpackungsmaschinen üblich, einen leeren Platz in der Produktreihe, der durch Herausnahme eines als fehlerhaft erkannten Produktes entstanden ist, mit Ersatz-Produkten aufzufüllen, die in einem Speicher aufgenommen sind. Auf diese Weise kann sichergestellt werden, dass an der Stapelstation eine stetige Reihe einzelner Produkte ankommt und somit der Produktstapel immer innerhalb des vorgegebenen Arbeitstaktes $T_A$ aufgebaut werden kann.

Die Zwischenspeicherung von Ersatz-Produkten ist jedoch verfahrenstechnisch sehr aufwendig und auch das automatische Auffüllen der Produktreihe mit den Ersatz-Produkten erfordert einen hohen gerätetechnischen Aufwand und somit hohe Kosten.

In der EP 0 712 782 A ist beschrieben, Produkte zwischen zwei Förderern zu übergeben, wobei die Folge der Produkte auf dem einen Förderer mittels Sensoren überwacht wird. Wenn in der Produktreihe eine Lücke entsteht, wird dies durch die Sensoren erfasst und die Bewegungsgeschwindigkeit des nachfolgenden Förderers wird in geeigneter Weise vermindert, bis das Produkt auf dem vorgeschalteten Förderer an der Übergabestation ankommt. Auf diese Weise kann der Abstand zwischen einander folgenden Produkten auf dem nachfolgenden Förderer konstant gehalten werden. Somit ist es aus diesem Dokument bekannt, die Bewegungsgeschwindigkeit des nachgeschalteten Förderers so zu vermindern, dass ein Abschnitt des Förderers eine vorbestimmte Relativposition relativ zu dem übergebenden Produkt einnimmt. Wenn in der Produktreihe jedoch eine relativ große Anzahl von Lücken vorhanden ist, führt dies Vorgehen zu einer wesentlichen Verminderung der Geschwindigkeit des nachfolgenden Förderers und somit zu einer Herabsetzung der Arbeitsleistung der Verpakkungsmaschine. Dabei kann es sogar passieren, dass der nachfolgende Förderer zeitweise zum Stillstand kommt, was zu rückartigen Belastungen des Förderers und auch der darauf befindlichen Produkte führt.

Der Erfindung liegt die Aufgabe zugrunde, ein Verfahren zur Steuerung der Übergabe eines Produktstapels in einer Verpackungsmaschine zu schaffen, mit dem sich die Bildung eines Produktstapels und dessen Übergabe an einen kontinuierlich arbeitenden Förderer in einfacher Weise erreichen lässt.

Diese Aufgabe wird erfindungsgemäß durch ein Verfahren mit den Merkmalen des Anspruchs 1 gelöst. Dabei ist vorgesehen, dass bei einer betriebsbedingten Verlängerung E des Arbeitstaktes $T_A$ und einem daraus resultierenden verzögerten Beginn des Übergabetaktes $T_T$ die Bewegungsgeschwindigkeit des Förderers so verändert wird, dass die Zelle oder eine darauffolgende Zelle des Förderers am Ende des Übergabetaktes $T_T$ die vorbestimmte Relativposition relativ zu dem Produktstapel einnimmt, wobei die Bewegungsgeschwindigkeit des Förderers in Abhängigkeit von der Größe der Verlängerung E des Arbeitstaktes $T_A$ entweder zeitweise auf einen Wert > 0 vermindert oder zeitweise erhöht wird, wobei die Bewegungsgeschwindigkeit des Förderers vermindert wird, wenn die Verlängerung E des Arbeitstaktes $T_A$ kleiner oder gleich dem halben Arbeitstakt $T_A$ ist (E ≤ 0,5 $T_A$).

Erfindungsgemäß wird davon abgesehen, eine Lücke in der der Stapelstation zugeführten Produktreihe, die durch Entnahme eines fehlerhaften Produktes entstanden ist, durch ein Ersatz-Produkt zu schließen, sondern es wird in Kauf genommen, dass sich der Aufbau des Produktstapels durch diese Lücke um zumindest einen Teil-Takt verzögert, wodurch auch der Beginn des Übergabetaktes $T_T$ der Übergabevorrichtung verzögert ist. Diese Verzögerung wird ausgeglichen, indem die Bewegungsgeschwindigkeit des Förderers, an den der Produktstapel übergeben wird, so verändert wird, dass am Ende des Übergabetaktes $T_T$ die vorbestimmte und notwendige Relativposition zwischen dem Produktstapel und der Zelle des Förderers wieder erreicht ist.

Dabei ist vorgesehen, dass die Bewegungsgeschwindigkeit des Förderers, wenn sie vermindert wird, immer auf einem Wert > 0 gehalten wird, d.h. der Förderer niemals zum vollständigen Stillstand kommt.

Wenn die Verlängerung E des Arbeitstaktes $T_A$ relativ groß ist, ist erfindungsgemäß vorgesehen, dass die Bewegungsgeschwindigkeit des Förderers dann nicht vermindert, sondern zeitweise erhöht wird, was dazu führt, dass diejenige Zelle des Förderers, die den Produktstapel ursprünglich aufnehmen sollte, mit erhöhter Geschwindigkeit an dem Übergabeplatz vorbeifährt, bevor der Produktstapel dort eintrifft, und der Produktstapel dann in die nachfolgende Zelle des Förderers in üblicher Weise eingeschoben wird.

Das erfindungsgemäße Verfahren soll im Folgenden anhand eines Beispiels erläutert werden, wobei dieses Beispiel den Schutzbereich der Erfindung jedoch nicht beschränkt.

Es sei angenommen, dass ein Produktstapel aus drei einzelnen Produkten innerhalb eines Arbeitstaktes $T_A$ aufgebaut wird, der drei Teil-Taktes umfasst. Wenn sich in der Produktreihe, die der Stapelstation zugeführt wird, eine Lücke befindet, da vorher ein fehlerhaftes Produkt entnommen wurde, sind vier Teil-Takte notwendig, um den Produktstapel mit drei einzelnen Produkten aufzubauen. Somit kann der Übergabetakt $T_T$ auch erst mit einer Verzögerung von einem Teil-Takt beginnen. Wenn der nachgeschaltete Förderer mit unveränderter Geschwindigkeit weiterliefe, wäre seine Zelle, in die der Produktstapel eingeschoben werden soll, bereits an dem Übergabepunkt vorbeigelaufen, wenn die Übergabevorrichtung mit dem Produktstapel den Übergabeort erreicht. Es ist deshalb vorgesehen, die Geschwindigkeit des Förderers so zu vermindern, dass der Produktstapel und die zugeordnete Zelle gleichzeitig den Übergabeort erreichen und somit die vorbestimmte Relativposition einnehmen. Dabei besitzt der Förderer bei oder unmittelbar nach Übergabe des Produktstapels wieder seine normale konstante Bewegungsgeschwindigkeit, die er bei einem störungsfreien Normalbetrieb der Verpackungsmaschine hat.

Wenn innerhalb der Produktreihe relativ viele Lücken auftreten, da eine Vielzahl von fehlerhaften Produkten aus der Reihe herausgenommen wurden, dauert der Aufbau eines Produktstapels so lange, das es zwar theoretisch möglich ist, jedoch keinen Sinn macht, die Bewegungsgeschwindigkeit des Förderers weit herabzusetzen oder den Förderer sogar stillzulegen. Gemäß der Erfindung ist deshalb vorgesehen, dass die Bewegungsgeschwindigkeit des Förderers nur dann vermindert wird, wenn die Verlängerung E des Arbeitstaktes $T_A$ kleiner oder gleich dem halben Arbeitstakt $T_A$ ist. Dies ist gegeben, wenn zum Aufbau eines Produktstapels, der aus n einzelnen Produkten aufgebaut wird, maximal 1,5n Teil-Takte benötigt werden.

In bevorzugter Ausgestaltung der Erfindung ist vorgesehen, dass die Bewegungsgeschwindigkeit des Förderers erhöht wird, wenn die Verlängerung E des Arbeitstaktes $T_A$ größer als der halbe Arbeitstaktes $T_A$ ist, d.h. E > 0,5 $T_A$.

In der Regel wird man versuchen, alle Zellen des Förderers mit jeweils einem Produktstapel zu füllen, d.h. bevorzugt die Bewegungsgeschwindigkeit des Förderers zu vermindern, wenn sich der Aufbau des Produktstapels verzögert. Es kann deshalb vorgesehen sein, dass die Bewegungsgeschwindigkeit des Förderers nur dann erhöht wird, wenn die Verlängerung E des Arbeitstaktes $T_A$ größer oder gleich dem 0,6-fachen des Arbeitstaktes $T_A$ ist, d.h. $E > 0{,}6\ T_A$.

Weitere Einzelheiten und Merkmale der Erfindung sind aus der folgenden Beschreibung von Ausführungsbeispielen unter Bezugnahme auf die Zeichnung ersichtlich. Es zeigen:

Fig. 1     eine schematische Darstellung der Stationen einer Verpackungsmaschine zum Aufbau und zur Übergabe eines Produktstapels,

Fig. 2     mehrere Weg-Zeit-Diagramme, die die Bewegungsverläufe der Arbeitsstationen der Verpackungsmaschine bei Normalbetrieb darstellen,

Fig. 3     ein Geschwindigkeits-Zeit-Diagramm des Förderers bei Normalbetrieb,

Fig. 4     mehrere Weg-Zeit-Diagramme, die die Bewegungsverläufe der Arbeitsstationen der Verpackungsmaschine bei verzögertem Aufbau des Produktstapels darstellen,

Fig. 5     ein Geschwindigkeits-Zeit-Diagramm des Förderers bei verzögertem Aufbau des Produktstapels und

Fig. 6     ein alternatives Geschwindigkeits-Zeit-Diagramm des Förderers bei verzögertem Aufbau des Produktstapels.

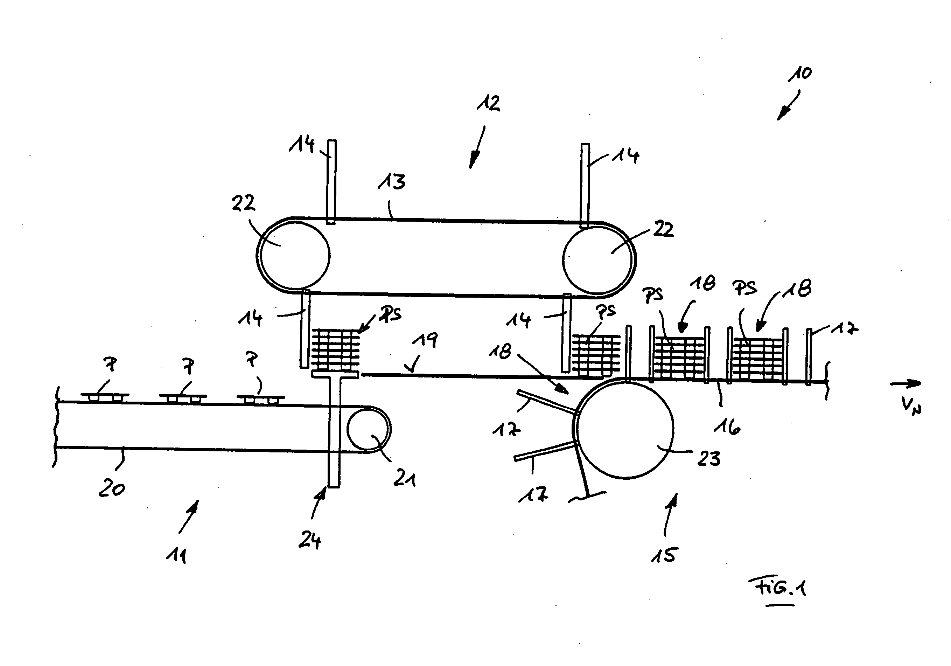

Fig. 1 zeigt einen Ausschnitt aus einer Verpackungsmaschine 10 mit einer Zuführeinheit 11, die ein über Umlenkrollen 21 umlaufendes Zuführband 20 aufweist, mit dem einzelne Produkte P, die auf Abstand hintereinander auf dem Förderband 20 angeordnet sind, in einer endlosen Reihe einer nur symbolisch dargestellten Stapelstation 24 zugeführt werden. Das Zuführband 20 ist getaktet angetrieben und führt im dargestellten Ausführungsbeispiel Produkte P in Form von Blisterstreifen zu.

In der Stapelstation 24 werden mehrere einzelne Produkte P zu einem Produktstapel PS aufeinandergestapelt. Sobald der Produktstapel PS fertig ist, wird eine Übergabevorrichtung 12 aktiviert, die ein um Umlenkrollen 22 umlaufendes Transportband 13 aufweist, das auf seiner Außenoberfläche nach außen hervorragende, in Transportrichtung beabstandete Schubfinger 14 trägt. Sobald der Produktstapel PS fertig ist, kommt einer der Schubfinger 14 mit dem Produktstapel PS in Anlage und schiebt diesen seitlich über eine Oberfläche 19 in Richtung eines kontinuierlich angetriebenen Förderers 15. Der Förderer 15 weist ein über Umlenkrollen 23 umlaufendes Förderband 16 auf, das auf seiner Außenseite senkrecht zur Förderrichtung nach außen herausragende Zellenwände 17 trägt. Zwischen zwei aufeinanderfolgenden Zellenwänden 17 ist jeweils eine Zelle 18 zur Aufnahme eines Produktstapels PS ausgebildet.

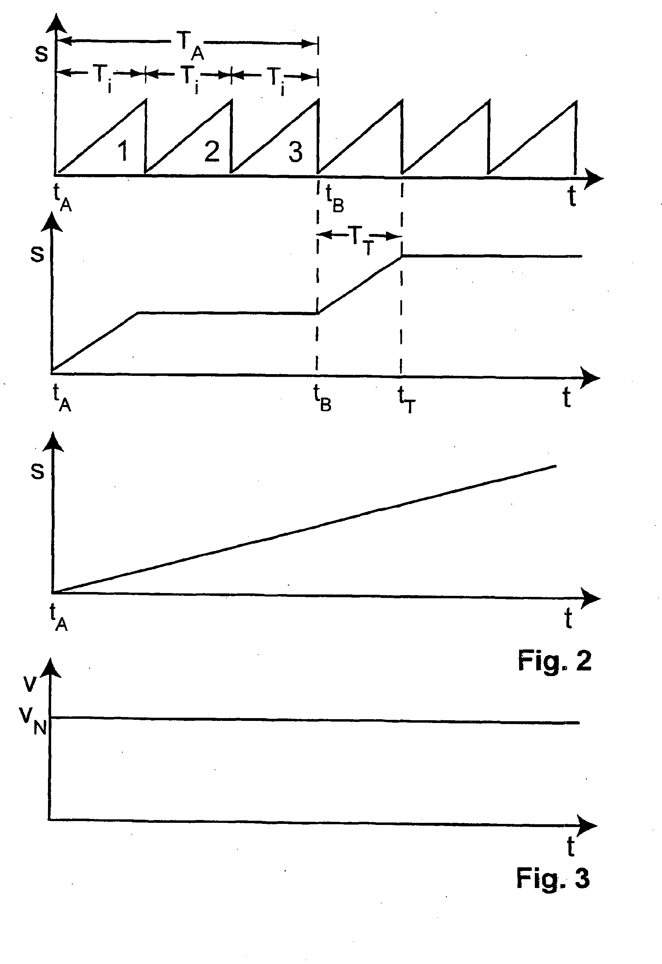

Wie Fig. 1 zeigt, werden die Zellenwände 17 beim Umlauf um die Umlenkrolle 23 gespreizt und somit die Zelle 18 geöffnet. Dies ermöglicht es, dass die Übergabevorrichtung 12 den Produktstapel PS in die Zelle 18 einschiebt. Sobald die Zellenwände 17 die Umlenkrolle 23 vollständig umlaufen haben und sich in einem gradlinigen Abschnitt des Verlaufs des Förderbandes 16 befinden, stehen die Zellenwände 17 wieder parallel zueinander und die Zelle 18 nimmt den Produktstapel PS unter enger Passung auf, wie es in Fig. 1 dargestellt ist. Im Folgenden soll anhand der Fig. 2 und 3 der Ablauf des störungsfreien Normalbetriebs beim Aufbau des Produktstapels PS und dessen Übergabe an den kontinuierlich angetriebenen Förderer 15 beschrieben werden.

Es sei davon ausgegangen, dass ein Produktstapel PS aus drei einzelnen Produkten P besteht. Das obere Diagramm in Fig. 2 verdeutlicht schematisch, dass der Aufbau des Produktstapels PS aus drei Produkten P die Zeitspanne eines Arbeitstaktes $T_A$ benötigt, der die Summe von drei Teil-Taktens $T_i$ darstellt. Innerhalb eines Teil-Taktes $T_i$ wird eines der mittels der Zuführeinheit 11 zugeführten Produkte P auf den Produktstapel PS aufgelegt. Zum Zeitpunkt $t_B$ ist ein Produktstapel PS aus drei Produkten P fertig.

Das zweite Diagramm in Fig. 2 zeigt die Bewegungen der Übergabevorrichtung 12 über die Zeit. Die Übergabevorrichtung 12 wartet, bis der Produktstapel PS fertig ist, woraufhin dann zum Zeitpunkt $t_B$ die Übergabe des Produktstapels PS beginnt, die innerhalb eines Übergabetaktes $T_T$ erfolgt und zu einem Zeitpunkt $t_T$ abgeschlossen ist.

Das dritte Diagramm in Fig. 2 zeigt die Bewegung des Förderers 15, der bei Normalbetrieb kontinuierlich und mit konstanter Geschwindigkeit bewegt wird, was auch nochmal in Fig. 3 verdeutlicht ist, in der die Geschwindigkeit über die Zeit aufgetragen ist. Die Geschwindigkeit $V_N$ des Förderers 15 ist bei Normalbetrieb konstant.

Wenn bei einer in Förderrichtung vor der Stapelstation 24 angeordneten Kontrolle festgestellt wird, dass ein Produkt P fehlerhaft ist, wird es ausgeschieden, so dass der Platz des ausgeschiedenen Produktes P auf dem Zuführband 20 frei bleibt und somit in der Produktreihe eine Lücke entsteht. Im Folgenden soll der Fall betrachtet werden, dass der Produktstapel PS weiterhin aus drei Produkten P aufgebaut wird, jedoch eine Lücke in der Produktreihe ausgeglichen wird.

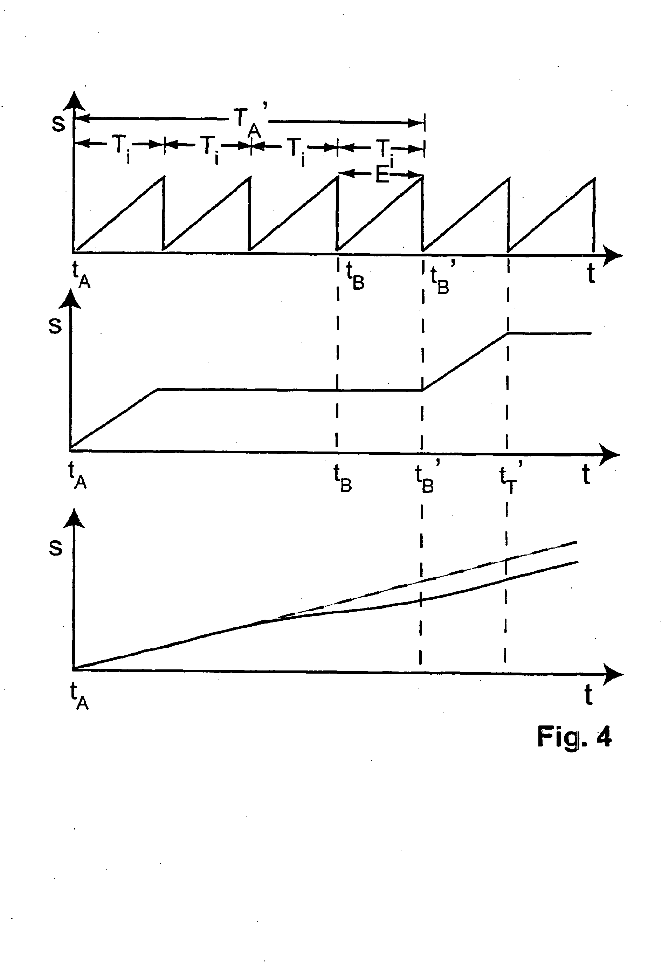

Fig. 4 zeigt eine der Fig. 2 entsprechende Darstellung mit dem Unterschied, dass nunmehr eine Lücke in der Produktreihe berücksichtigt ist. Um den Produktstapel PS aufzubauen, ist nunmehr ein Arbeitstakt $T_A^{'}$ notwendig, der sich aus vier Teil-Takten $T_i$ zusammensetzt, d.h. eine zeitliche Verlängerung E von einem Teil-Takt $T_i$ aufweist. Somit ist der Produktstapel nicht bereits zum Zeitpunkt $t_B$, sondern erst zum Zeitpunkt $t_B^{'}$ fertig. Dies erfordert, dass die Übergabevorrichtung 12 wartet, bis der Produktstapel PS fertig ist, so dass die Übergabebewegung auch erst zum Zeitpunkt $t_B^{'}$ beginnt, wie es in Fig. 4 dargestellt ist. Die Übergabe des Produktstapels PS ist zum Zeitpunkt tT beendet.

Der kontinuierlich angetriebene Förderer 15, der im Normalbetrieb mit konstanter Bewegungsgeschwindigkeit $V_N$ bewegt wird, wird an die Verzögerung beim Aufbau des Produktstapels PS angepasst. In der Steuerung der Verpackungsmaschine ist abgespeichert, dass ein fehlerhaftes Produkt ausgeschieden wurde und dass der Aufbau des nächsten Produktstapels PS länger dauern wird. Sobald der vorherige Produktstapel PS vom Förderer 15 ordnungsgemäß übernommen wurde, wird die Bewegungsgeschwindigkeit des Förderers 15 so weit abgesenkt und anschließend wieder auf die Normal-Geschwindigkeit $V_N$ erhöht, so dass die Übernahmeposition für den Produktstapel PS erst zum Zeitpunkt $t_T^{'}$ erreicht ist, wie es im unteren Diagramm der Fig. 4 dargestellt ist, wobei die sich bei Normalbetrieb ergebene Kurve gestrichelt dargestellt ist.

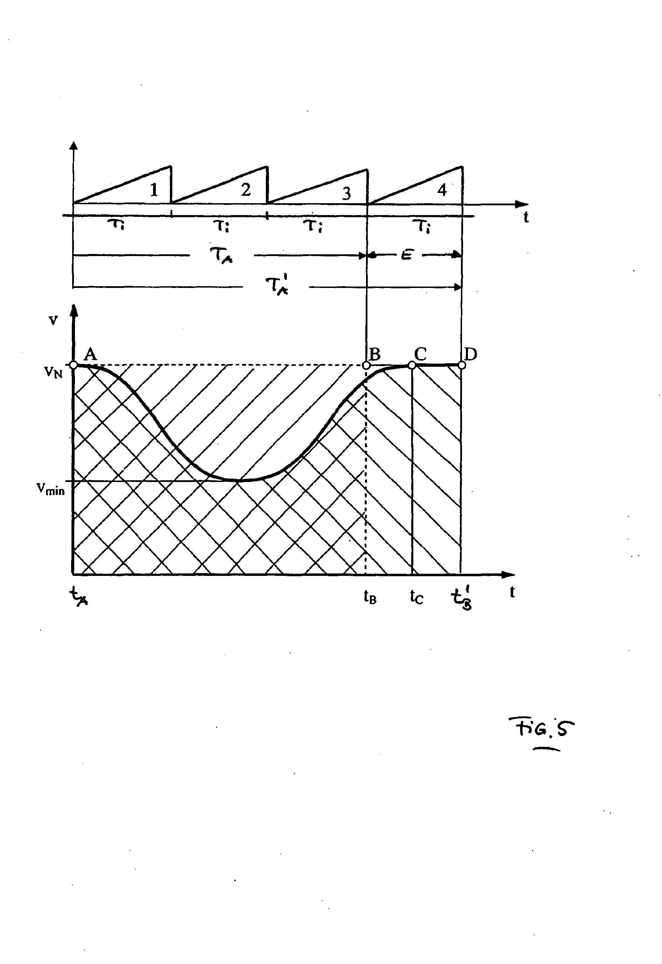

Die Verhältnisse bezüglich der Anpassung der Bewegungsgeschwindigkeit des kontinuierlich angetriebenen Förderers 15 sind auch aus dem Geschwindigkeits-Weg-Diagramm in Fig. 5 ersichtlich. Im Normalbetrieb wird der Förderer 15 mit der konstanten Geschwindigkeit $V_N$ angetrieben. Um die Verzögerung E beim Aufbau des Produktstapels PS auszugleichen, wird die Bewegungsgeschwindigkeit des Förderers 15 auf einen Wert $V_{min}$ abgesenkt, wobei vermieden wird, dass der Förderer 15 zum Stillstand kommt. Anschließend wird die Bewegungsgeschwindigkeit wieder erhöht, wobei zu einem Zeitpunkt $t_C$ bzw. im Punkt C, der innerhalb der Verlängerung E des Arbeitstaktes $T_A$ liegt, wieder die normale Bewegungsgeschwindigkeit $V_N$ erreicht ist. Es wird angestrebt, dass der Punkt C möglichst nahe am Endpunkt D bzw. nahe dem Zeitpunkt $t_B^{'}$ und somit am Ende des verlängerten Arbeitstaktes $T_A^{'}$ liegt, um eine möglichst geringe Geschwindigkeitsänderung erzielen zu können. Im günstigsten Fall fallen die Punkte C und D zusammen, d.h. der Förderer 15 erreicht erst unmittelbar am Ende des verlängerten Arbeitstaktes $T_A^{'}$ wieder seine normale Bewegungsgeschwindigkeit $V_N$.

Zur Verdeutlichung sei darauf hingewiesen, dass die Fläche unterhalb der Geschwindigkeitskurve zwischen den Zeitpunkten $t_A$ und $t_B^{'}$ genauso groß ist wie die Fläche unterhalb der sich bei Normalbetrieb ergebenden Geschwindigkeitsgraden zwischen den Punkten A und B zwischen den Zeitpunkten $t_A$ und $t_B$. In beiden Fällen entspricht die Fläche dem zurückgelegten Weg der Zelle bzw. dem Rastermaß aufeinanderfolgender Zellen 18 des Förderers 15.

Im vorher beschriebenen Ausführungsbeispiel war der Arbeitstakt $T_A$, der im Normalbetrieb aus drei Teil-Takten $T_i$ besteht, durch Aussondern eines fehlerhaften Produktes um einen zusätzlichen Teil-Takt $T_i$, d.h. um 33,33% verlängert worden. Wenn sich der Aufbau des Produktstapels PS aufgrund mehrerer Lücken in der Produktreihe noch weiter verzögert, kann es sinnvoll sein, die Geschwindigkeit des Förderers nicht abzusenken, um die zeitliche Verzögerung beim Aufbau des Produktstapels PS auszugleichen, sondern die Bewegungsgeschwindigkeit des Förderers 15 zu erhöhen, um dadurch eine Zelle 18 des Förderers leer zu lassen und den Produktstapel PS, dessen Aufbau sich übermäßig verzögert hat, erst der darauffolgenden Zelle zuzuführen. Ein entsprechendes Beispiel ist in Anlage 6 in Form eines Geschwindigkeits-Zeit-Diagramms dargestellt.

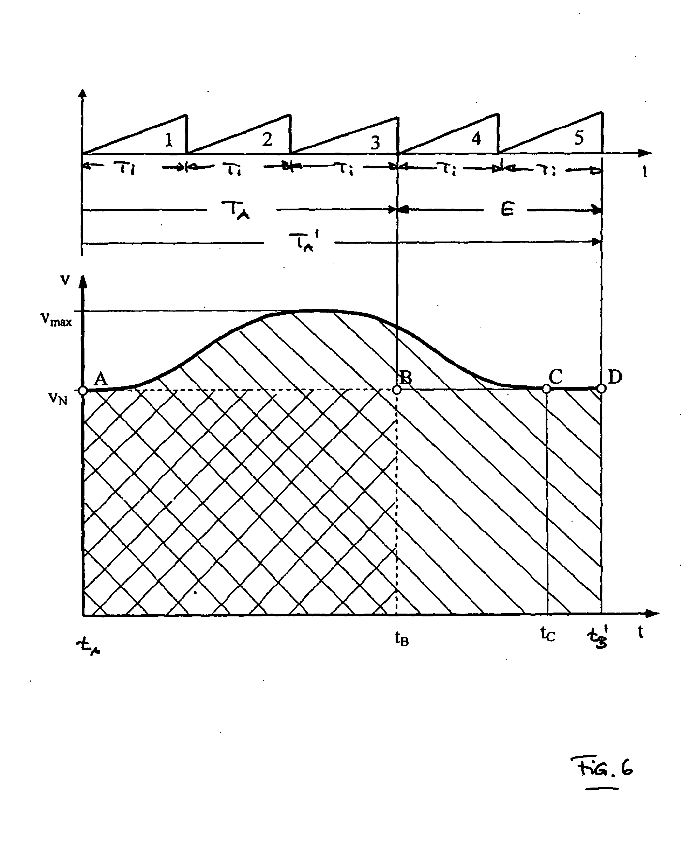

Es wird davon ausgegangen, dass der normale Arbeitstakt $T_A$, der sich aus drei Teil-Takten $T_i$ zusammensetzt, aufgrund von zwei Lücken in der Produktreihe um zwei Teil-Takte $T_i$ verlängert ist, so dass der verlängerte Arbeitstakt $T_A^{'}$, der zum Aufbau des Produktstapels PS notwendig ist, insgesamt fünf Teil-Takte $T_i$ umfasst und somit um 66,66% verlängert ist. Wie Fig. 6 zeigt, wird dann die Geschwindigkeit des kontinuierlich bewegten Förderers 15 von der normalen Bewegungsgeschwindigkeit $V_N$ auf eine Geschwindigkeit $V_{max}$ erhöht und anschließend wieder auf die normale Bewegungsgeschwindigkeit $V_N$ abgesenkt, die wie im vorhergehenden Beispiel im Punkt C erreicht ist. Aufgrund der erhöhten Bewegungsgeschwindigkeit des Förderers 15 fährt diejenige Zelle 18, in die der Produktstapel PS ursprünglich eingeschoben werden sollte, am Übergabebereich vorbei und zum Übergabezeitpunkt des Produktstapels PS hat bereits die darauffolgende Zelle 18 des Förderers 15 den Übergabebereich erreicht und nimmt den Produktstapel PS auf.

Die Fläche unterhalb der Geschwindigkeitskurve in Fig. 6 zwischen den Punkten A und D in den Grenzen $t_A$ und $t_{BA}^{'}$ ist exakt doppelt so groß wie die Fläche unterhalb der Geraden zwischen den Punkten A und B in den Grenzen $t_A$ und $t_B^{'}$, die bei Normalbetrieb abgefahren wird. Da die Fläche die Bewegungsstrecke des Förderers darstellt, ergibt sich, dass bei Normalbetrieb der Förderer 15 um einen Zellenabstand vorbewegt wird, während gemäß Fig. 6 der Förderer 15 um zwei Zeilenabstände vorbewegt wird und somit eine Zelle übersprungen wird.

Lediglich der Vollständigkeit halber sei erwähnt, dass selbstverständlich keine Änderung der Bewegungsgeschwindigkeit des Förderers notwendig ist, wenn die zeitliche Verlängerung E des Arbeitstaktes $T_A$ gleich dem Arbeitstakt $T_A$ oder einem ganzzahligen Vielfachen davon ist, da in diesen Fällen selbsttätig eine oder mehrere Zellen übersprungen werden, ohne dass es dazu einer Anpassung der Bewegungsgeschwindigkeit des Förderers 15 bedarf.

**Patentansprüche**

1. Verfahren zur Steuerung der Übergabe eines Produktstapels (PS) in einer Verpackungsmaschine, wobei der Produktstapel (PS) während eines Arbeitstaktes ($T_A$) aus n Produkten (P) aufgebaut und anschließend während eines Übergabetaktes ($T_T$) mittels einer Übergabevorrichtung (12) in eine Zelle (18) eines kontinuierlich bewegten Förderers (15) übergeben wird, wobei der in der Übergabevorrichtung (12) befindliche Produktstapel (PS) und die Zelle (18) des Förderers (15) zumindest am Ende des Übergabetaktes ($T_T$) eine vorbestimmte Relativposition einnehmen, **dadurch gekennzeichnet, dass** bei einer betriebsbedingten Verlängerung (E) des Arbeitstaktes ($T_A$) und einem daraus resultierenden verzögerten Beginn des Übergabetaktes ($T_T$) die Bewegungsgeschwindigkeit des Förderers (15) so verändert wird, dass die Zelle (18) oder eine darauffolgende Zelle (18) des Förderers (15) am Ende des Übergabetaktes ($T_T$) die vorbestimmte Relativposition relativ zu dem Produktstapel (PS) einnimmt, wobei die Bewegungsgeschwindigkeit des Förderers (15) in Abhängigkeit von der Größe der Verlängerung (E) des Arbeitstaktes ($T_A$) entweder zeitweise auf einen Wert >0 vermindert oder zeitweise erhöht wird, wobei die Bewegungsgeschwindigkeit des Förderers (15) vermindert wird, wenn die Verlängerung (E) des Arbeitstaktes ($T_A$) kleiner oder gleich dem halben Arbeitstakt ($T_A$) ist (E ≤ 0,5 $T_A$).

2. Verfahren nach Anspruch 1, **dadurch gekennzeichnet, dass** die Bewegungsgeschwindigkeit des Förderers (15) erhöht wird, wenn die Verlängerung (E) des Arbeitstaktes ($T_A$) größer als der halbe Arbeitstakt ($T_A$) ist (E > 0,5 $T_A$).

**Claims**

1. A method for controlling the transfer of a product stack () in a packing machine, wherein the product stack (S) is built up during a work cycle ($T_A$) from n products (P) and then transferred by means of a transfer device (12) into a cell (18) of a continuously moved conveyor (15), wherein the product stack (PS) present in the transfer device (12) and the cell (18) of the conveyor (15) assume a predetermined relative position at least at the end of the transfer cycle ($T_T$), **characterised in that** in an operationally conditioned extension (E) of the work cycle ($T_A$) and a resultant delayed start of the transfer cycle ($T_T$), the speed of movement of the conveyor (15) is varied so that the cell (18) or a subsequent cell (18) of the conveyor (15) assumes the predetermined relative position to the product stack (PS) at the end of the transfer cycle ($T_T$), wherein the speed of movement of the conveyor (15) is, as a function of the size of the extension (E) of the work cycle ($T_A$), either temporarily reduced to a value >0 or is temporarily increased, wherein the speed of movement of the conveyor (15) is reduced when the extension (E) of the work cycle ($T_A$) is smaller than or equal to half the work cycle ($T_A$) (E ≤ 0.5 $T_A$).

2. The method according to Claim 1, **characterised in that** the speed of movement of the conveyor (15) is increased when the extension (E) of the work cycle ($T_A$) is greater than half the work cycle ($T_A$) (E > 0.5 $T_A$).

**Revendications**

1. Procédé pour commander le transfert d'une pile de produits (PS) dans une machine d'emballage, la pile de produits (PS) étant constituée à partir de n produits (P) pendant un temps de travail ($T_A$) puis transférée dans une cellule (18) d'un convoyeur (15) se déplaçant en continu pendant un temps de transfert ($T_T$) à l'aide d'un dispositif de transfert (12), la pile de produits (PS) se trouvant dans le dispositif de transfert (12) et la cellule (18) du convoyeur (15) adoptant une position relative prédéterminée au moins à la fin du temps de transfert ($T_T$), **caractérisé en ce que** lors d'un prolongement (E) en fonctionnement du temps de travail ($T_A$) et d'un commencement du temps de transfert ($T_T$) de ce fait décalé, la vitesse de déplacement du convoyeur (15) est modifiée de telle sorte que la cellule (18) ou une cellule (18) suivante du convoyeur (15) adopte, à la fin du temps de transfert ($T_T$), la position relative prédéterminée par rapport à la pile de produits (PS), la vitesse de déplacement du convoyeur (15) étant temporairement réduite ou accrue d'une valeur >0 en fonction de la longueur du prolongement (E) du temps de travail ($T_A$), la vitesse de déplacement du convoyeur (15) étant réduite lorsque le prolongement (E) du temps de travail ($T_A$) est inférieur ou égal à la moitié du temps de travail ($T_A$) (E ≤ 0,5 $T_A$).

2. Procédé selon la revendication 1, **caractérisé en ce que** la vitesse de déplacement du convoyeur (15) est accrue lorsque le prolongement (E) du temps de travail ($T_A$) est supérieur ou égal à la moitié du temps de travail ($T_A$) ($E > 0,5\ T_A$).

Fig. 1

Fig. 2

Fig. 3

Fig. 4

FIG. 5

FIG. 6

**EP 2 097 324 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0712782 A